Europäisches Patentamt

European Patent Office

Office européen des brevets

(19)

(11) Veröffentlichungsnummer: **0 124 854**
**A2**

(12) # EUROPÄISCHE PATENTANMELDUNG

(21) Anmeldenummer: **84104869.7**

(22) Anmeldetag: **30.04.84**

(51) Int. Cl.³: **B 65 B 21/18**

(30) Priorität: **05.05.83 DE 3316479**

(43) Veröffentlichungstag der Anmeldung:
**14.11.84 Patentblatt 84/46**

(84) Benannte Vertragsstaaten:
**AT BE CH DE FR GB IT LI LU NL SE**

(71) Anmelder: **Max Kettner Verpackungsmaschinenfabrik
GmbH & Co. KG
Ottobrunner Strasse 1
D-8000 München 83(DE)**

(72) Erfinder: **Erben, Manfred
Korbinianstrasse 4
D-8200 Rosenheim(DE)**

(72) Erfinder: **Stadler, Siegfried, Dipl.-Ing.
Laubensteinweg 5
D-8210 Prien(DE)**

(74) Vertreter: **Stapf, Otto F., Dipl.-Ing. et al,
Patentanwälte Dr. Berg Dipl.-Ing. Stapf Dipl.-Ing.
Schwabe Dr. Dr. Sandmair Postfach 86 02 45
Stuntzstrasse 16
D-8000 München 86(DE)**

(54) **Maschine zum Ein- und Auspacken von Kleinpackungen in oder aus oben offenen Transportgebinden.**

(57) Durch die Erfindung wird eine Maschine zum Aus- und Einpacken geschaffen, bei der auf einfache Weise die freie Beweglichkeit in einer Ebene erreicht ist, indem eine an einem Grundrahmen (1) angebrachte Stütze (2) um eine horizontale, zur Richtung eines oben an der Stütze parallel geführten Auslegers (6) senkrechte, Achse (4) verschwenkbar ist. Am Ausleger wiederum ist der Greiferkopf (36) vertikal parallel geführt beweglich.

Fig.1

EP 0 124 854 A2

Maschine zum Ein- und Auspacken von Kleinpackungen in oder aus
oben offenen Transportgebinden

B e s c h r e i b u n g

Die Erfindung betrifft eine Maschine zum Ein- und Auspacken von
Kleinpackungen in oder aus oben offenen Transportgebinden, mit
einem horizontalen Grundrahmen, einer sich in einer im wesentlichen senkrechten Ebene nach oben erstreckenden Stütze und
einem an deren oberen Ende angebrachten, davon im wesentlichen
waagrecht abragenden Ausleger, an dem ein Greiferträger
angebracht ist, der horizontal in Richtung des Auslegers
beweglich ist und relativ zum Ausleger vertikal parallel
geführt beweglich ist, und mit einem ersten, zumindest die
Horizontalbewegung bewirkenden, Antrieb und mit einem zweiten
Antrieb für die Hubbewegung.

Unter "Kleinpackungen" sollen hier in erster Linie Flaschen, aber auch Dosen, Gläser, Kartonweichpackungen u.ä. verstanden werden, während unter den Gebinden in erster Linie Transportkästen, Kartons, Kisten u.ä. verstanden werden. Dabei greift die Maschine mittels der Greifer am Greiferträger die auf einer Zuführbahn herangeführten Kleinpackungen und setzt sie auf eine zweite, z.B. parallele Bahn (Gebindebahn), auf der die Transportbehälter gefördert werden (Einpacken). Oder es werden die auf der Gebindebahn herangeführten vollen Gebinde durch Ergreifen der in ihnen befindlichen Kleinpackungen geleert und die Kleinpackungen auf der parallelen Bahn (jetzt Abführbahn) abgeführt.

Gegenwärtig werden zum Ein- und Auspacken von Kleinpackungen aus oben offenen Transportgebinden am häufigsten Maschinen verwandt, bei denen sich der Greiferträger, durch eine Führungsbahn geführt und parallelgehalten, nur auf einer vorgegebenen Kurve bewegen kann, deren Anfangs- und Endpunkte allenfalls durch komplizierte mechanische Umbauten etwas an unterschiedliche Lagen von Förderbahnen anpaßbar sind. Dieser Stand der Technik wird bspw. durch die DE-OS 1 586 302 repräsentiert.

Um zu ermöglichen, daß die Lage des Greiferträgers in einer vertikalen Ebene freier bestimmt werden kann, d.h. z .B. innerhalb eines Vierecks, und nicht nur auf einer Linie, wurde schon, wie z.B. in der DE-OS 26 07 165 ersichtlich, eine Ein- und Auspackmaschine der eingangs angegebenen Gattung entwickelt.

Diese gattungsgemäße Maschine hat jedoch insbesondere folgende Nachteile: Ihre Bauhöhe ist unabhängig von der jeweiligen Aufgabe vorgegeben, und da diese Bauhöhe der zu erwarteten größten Höhe angepaßt werden muß, ist die bekannte Maschine häufig unnötig groß und sperrig. Das gleiche gilt für den die Horizontalausdehnung der zu überstreichenden Fläche bestimmenden Ausleger, der stets maximal auskragt. Ferner muß
zur Horizontalverschiebung ein Wagen auf dem Ausleger
vorgesehen sein, der u.a. durch die Führung mit vier Rollen in
einem Rahmen einen komplizierten Aufbau besitzt. Ferner muß
entweder der Hubmotor auf dem Wagen befestigt sein und somit
mit diesem ständig hin- und hergefahren werden, was Nachteile
vor allem beim An- und Abfahren und beim Massenausgleich mit
sich bringt, wobei noch das Fahrgestell des Wagens entsprechend
robuster sein muß, oder der Hubmotor ist gesondert am Ausleger
angeordnet, was dann aber durch den wechselnden Abstand
Probleme der Umwandlung der Motorbewegung in die Hubbewegung
mit sich bringt, die aufwendige mechanische Konstruktionen erfordern.

Ferner muß der der Horizontalbewegung durch Antrieb des Wagens
dienende Motor entweder auf dem Ausleger angebracht sein. was
ihn schwer zugänglich macht, oder die Motordrehung muß wieder
verhältnismäßig umständlich über eine größere Entfernung auf
den Wagen umgelenkt werden.

Die Erfindung schafft daher eine Maschine der angegebenen
Gattung, die mechanisch einfach ist und sich den jeweiligen
Verhältnissen besonders gut anpassen läßt. Dies wird
erfindungsgemäß dadurch erreicht, daß die Stütze am Grundrahmen
um eine horizontale, zur Richtung des Auslegers senkrechte,
Achse schwenkbar angebracht ist und für den Ausleger eine
Parallelführung vorgesehen ist.

Die erfindungsgemäße Lösung hat insbesondere folgende Vorteile:

Da die Schwenkbewegung bei verschiedener Neigung der Stütze
erfolgen kann, ist die Bauhöhe der Gesamtanordnung
veränderlich. Ferner kann die notwendige Horizontalbewegung des
Greiferträgers ohne einen Ausleger mit maximaler Auskragung
erzielt werden. Die sich ergebende Maschine hat wenige Bauteile und ist mechanisch einfach und robust. Der Antriebsmotor für
die Stütze kann - und wird zweckmäßig - am Grundrahmen gut zugänglich angeordnet werden.

Besonders bevorzugt weist die Maschine einen Exzenterantrieb
zum Verschwenken der (Pendel-)Stütze auf (Kurbelscheibe mit
Schwinge). Dadurch läßt sich ein besonders geeigneter,
Bewegungsablauf der Horizontalbewegung erreichen, und die
Bewegungsenergie wird ruck- und stoßfrei übertragen.

Bevorzugt ist die Schubstange (12) des Exzenterantriebs in der
Länge verstellbar ausgebildet. Dadurch lassen sich Anfangs- und
Endstellung der Stütze bequem verstellen. Zusätzlich ist
bevorzugt der Anlenkpunkt der Schubstange an der Kurbelscheibe
verstellbar, bspw. in einer Langlochführung.

Besonders bevorzugt ist daß die Schubstange des Exzenters durch
zwei Kugelgelenke einerseits mit dem Exzenter und anderseits
mit der Stütze verbunden und die Exzenterscheibe um eine zur
Exzenterscheibe parallele, durch den Anlenkpunkt des
Kugelgelenks an der Exzenterscheibe gehende Achse schwenkbar.

Dies ermöglicht es, den Horizontalhub der Stütze auf besonders
elegante und leicht durchzuführende Weise an die Lage der
jeweiligen Zu- und Abführbahnen anzupassen. Durch die
Verschwenkung kann dieser Hub stufenlos zwischen Null und einem
Maximalhub verstellt werden.

Bevorzugt ist dabei die Anordnung aus Motor, Abtriebswelle und
Exzenterscheibe, vorzugsweise durch einen Servomotor,
verschwenkbar. Damit ist es den Bedienungspersonen auf einfache
Weise möglich, die Anpassung einfach durch "Ausprobieren"
durchzuführen. Dabei wird bevorzugt die Bewegung des Motors
über einen Dreh-Impulsgeber in die automatische Steuerung integriert.

Besonders bevorzugt wird die Parallelführung des Auslegers durch ein Gelenkparallelogramm aus Grundrahmen, Stütze, Ausleger und einer Hilfsstütze zwischen Ausleger und Grundrahmen erreicht. Dies ermöglicht eine besonders einfache Parallelführung des Auslegers und damit auch des Greiferträgers.

Bevorzugt ist dabei die Hilfstütze an der vom Anbringungsende des Greiferträgers abgelegenen Seite jenseits der Pendelstütze angebracht. Dadurch läßt sich vor allem der Raum unter dem Ausleger optimal nutzen.

Bevorzugt wird bei Parallelführung des Auslegers der Greiferträger am Ausleger geradlinig geführt. Die Parallelführung des Auslegers erlaubt gerade die besonders einfache geradlinige Führung des Greiferträgers am Ausleger. Für den Greiferträger müssen also keine komplizierten Führungskurven vorgesehen sein.

Bevorzugt weist die geradlinige Führung ein Teleskophubwerk auf. Dieses ermöglicht noch einmal eine beträchtliche Einsparung an Bauhöhe, da einerseits der Greiferträger, um Schwingungen zu verhindern, geführt und nicht etwa bspw. an einem Seil hängend gehoben und gesenkt werden sollte, andererseits eine solche Führung vertikal zuviel Raum beanspruchen würde.

Bevorzugt weist gemäß Merkmalen von besonderer und eigenständiger Bedeutung ein Teleskophubwerk ein erstes, ein zweites und ein drittes Verschiebeelement auf, wobei das erste und das dritte Element jeweils am zweiten Element in Hubrichtung verschieblich angebracht sind und, sich in Hubrichtung erstreckende, zumindest die Länge ihrer Verschiebestrecke aufweisende, Zahnführungen aufweisen, die einander zugewandt sind und mit gegenüberliegenden Seiten eines am zweiten Element frei drehbar angebrachten Ritzels kämmen, wobei die Verschiebewege so angeordnet sind, daß sich in den beiden Endstellungen die in Hubrichtung voneinander abgewandten Enden der
Zahnstangen gegenüberliegen.

Die Zahnstangen sind folglich über die ganze mögliche
Verschiebung mit dem Ritzel in Eingriff. Durch den Eingriff am
Ritzel an gegenüberliegenden Seiten wird also eine gegenläufige
Bewegung erzeugt bzw. zugelassen, die das System teleskopartig
auseinanderzieht. Dabei sorgt das Ritzel für eine verstetigte
und vor allem gleichzeitige Bewegung der drei Verschiebeelemente gegeneinander und kann dadurch ggfs. auch Beeinträchtigungen an einer Gleitführung oder dgl. besser
ausgleichen.

Bevorzugt ist das erste Element am Ausleger und das dritte
Element am Greiferträger starr befestigt. Dadurch ist bei der
Maschine der Greiferträger teleskopartig am Ausleger
angebracht.

Bevorzugt ist der zweite Antrieb auf der Gelenkachse Stütze/
Ausleger angeordnet, wobei sich sein Drehmoment vorzugsweise
auf dem Ausleger abstützt. Dadurch wirkt das Gewicht des
Antriebs auf die (Haupt-)Stütze und behindert nicht die
Parallelführung des Auslegers. Die auf den Ausleger wirkenden
Kräfte können dementsprechend geringer gehalten werden.
Dadurch, daß sich das Drehmoment am Ausleger abstützt, tritt
keine Veränderung des Weges zwischen dem Antrieb und der
Vertikalen der Hubbewegung auf. Andernfalls würde sich der
Antrieb z.B. mit der Drehung der Hauptstütze bei der Schwenkbewegung mitdrehen.

Bevorzugt ist der Greiferträger am einen Ende einer Kette
befestigt, die um ein erstes, am Ausleger angebrachtes, freies
Umlenk-Kettenrad, und um ein zweites, am Ausleger angebrachtes,
vom zweiten Antrieb angetriebenes Kettenrad läuft. Damit läßt
sich der Ort des Greiferträgers zuverlässig einstellen und angeben.

Bevorzugt ist eine Einrichtung zum Masseausgleich am dem Greiferträger entgegengesetzten Ende der Kette angebracht. Dadurch kann die Kraft und damit die Größe des Antriebs für den Hub des Greiferträgers entspechend verringert werden.

Bevorzugt ist ein Gegengewicht als Massenausgleich vorgesehen. Besonders bevorzugt läuft das Gegengewicht in der hohl ausgebildeten Stütze. Dadurch kann das Gegengewicht keine Behinderung oder Gefährdung bilden und kann einfach bei der Bewegung der Anordnung mitgeführt werden.

Alternativ bevorzugt ist als Massenausgleich eine mechanische, hydraulische oder pneumatische Feder vorgesehen.

Besonders bevorzugt ist eine Steuerung, die eine Einrichtung zur Erfassung des von der Stütze durchfahrenen Winkels mit einem zugehörigen Zähler, eine Einrichtung zur Erfassung des vom Greiferträger zurückgelegten Weges mit einem zugehörigen Zähler, und einen Vergleicher aufweist, wobei der Vergleicher die Momentanwerte der Zähler mit Momentan-Sollwerten einer vorgegebenen Bahnkurve vergleicht und die Geschwindigkeit der Antriebe entsprechend steuert. Dadurch ist es möglich, mit der Maschine unterschiedliche Bahnkurven, vor allem auch mit unterschiedlichen Geschwindigkeiten und Beschleunigungen, zu fahren.

Besonders bevorzugt ist eine Einrichtung zur Erfassung momentaner Geschwindigkeitswerte der Antriebe vorgesehen. Diese ist vorzugsweise als Tachogenerator ausgebildet. Damit können Momentangeschwindigkeiten nicht nur anhand der durch die Zählerstände vermittelten Ortsangaben, anhand derer die Sollwerte der Geschwindigkeit für diese Orte dem Speicher entnommen werden können, gesteuert, sondern aufgrund der Rückmeldung geregelt werden.

Bevorzugt ist eine Einrichtung zur Speicherung einer Folge von Momentanwerten zumindest während des nichtautomatischen Durchfahrens einer Bahnkurve durch den Greiferträger . Es ist also die die Momentan-Sollwerte der Bahnkurve, also die jedem Zeitpunkt zugeordneten Sollwerte, speichernde Einrichtung während bspw. einer von Hand gesteuerten Kurve einstellbar, so daß dann diese von Hand den jeweiligen Gegebenheiten angepaßte Kurve automatisch wiederholt werden kann.

Nachfolgend wird die Erfindung anhand der beigefügten Zeichnungen, auf die wegen ihrer großen Klarheit und Übersichtlichkeit bzgl. der Offenbarung ausdrücklich verwiesen wird, noch näher erläutert. Es zeigen:

Fig.  1: Eine Seitenansicht einer bevorzugten Ausführungsform der erfindungsgemäßen Maschine.

Fig.  2: Eine Aufsicht auf die Maschine der Fig. 1.

Fig.  3: Eine Ansicht der Maschine der Fig. 1, in der Fig. 1 von links gesehen.

Fig.  4a und b:Eine schematische Darstellung zur Erläuterung der Hubveränderung durch Verschwenken der Exzenterscheibe, wobei Null-Hub bzw. Maximal-Hub gezeigt sind.

Fig.  5a und b:Eine Ansicht des erfindungsgemäßen Teleskopmechanismus des Hubarms der Maschine aus Fig. 1 in oberer bzw. unterer Stellung.

Fig.  6: eine schematische Darstellung der Hin- und Rück-Bahnkurve des Greiferträgers, wobei die Bahnkurven zur Verdeutlichung seitlich zueinander versetzt sind, mit Umsteuerpunkten.

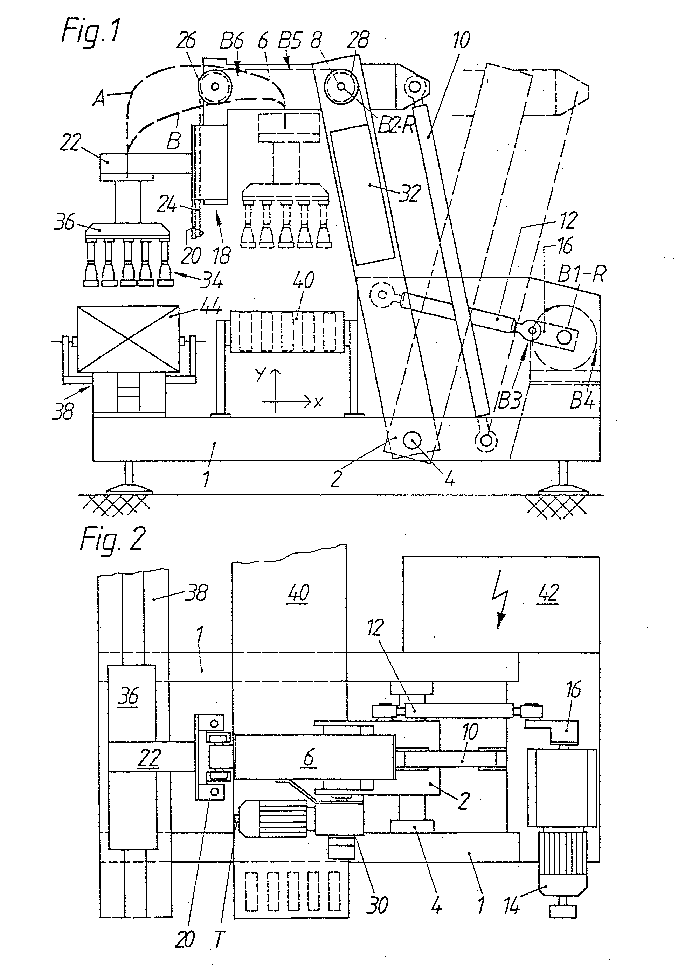

In Fig. 1 bis 3 ist ein stabiler, rechteckiger, im wesentlichen horizontaler Grundrahmen 1 gezeigt, an dem die weiteren Bestandteile der Ein- und Auspackmaschine angebracht sind. Zwischen zwei langen Seiten des horizontalen Rechteckrahmens 1 ist an ihrem unteren Ende eine, sich in einer vertikalen Ebene, der Schwenkebene, erstreckende, Pendelstütze 2 um eine horizontale Achse 4 schwenkbar gelagert. Die Pendel- oder Schwenkebene ist also in Fig. 1 parallel zur Zeichenebene. Am oberen Ende der Stütze 2 ist ein Tragarm 6 um eine zur Achse 4 parallele Achse 8 schwenkbar gelagert. Die Anordnung aus Stütze 2, Tragarm 6 und Rahmen 1 wird durch eine Hilfsstütze 10 zu einem Gelenkparallelogramm ergänzt, in dem der Tragarm 6 eine im wesentlichen waagrechte Stellung einnimmt. D.h., die Hilfstütze 10 ist an einer Seite der Stütze 2 um eine zur Schwenkachse 4 der Stütze 2 am Rahmen 1 parallele Achse am Rahmen und und um eine, zur Schwenkachse 8 der Stütze 2 relativ zum Tragarm 6, parallele Achse schwenkbar am Tragarm 6 angelenkt. Der vertikale Abstand der Ebenen der Achsen am Rahmen und der vertikale Abstand der Ebenen der Achsen am Tragarm ist also gleich, und vorzugsweise Null.

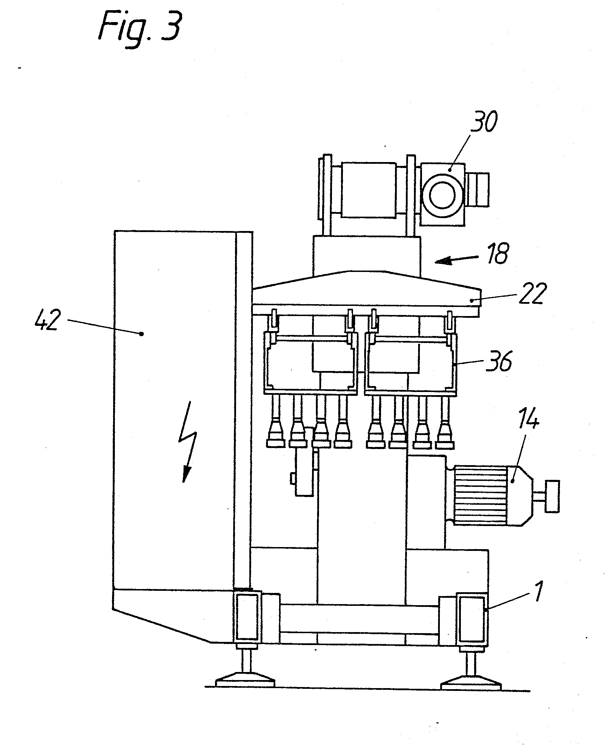

An der Pendelstütze 2 ist eine (verstellbare) Schubstange 12 angelenkt, die an ihrem anderen Ende an einer durch einen Motor 14 angetriebenen Kurbel 16 angelenkt ist. Somit wird in der Regel die Stütze 2 durch die Drehung der Kurbel zwischen zwei Endstellungen hin- und herverschwenkt. Die eine, in Fig. 1 und 2 linke, in Fig. 3 vor der Zeichenebene liegende Endstellung ist in Fig. 1 ausgezogen gezeigt, die andere gestrichelt. Die Endstellungen sind dabei veränderlich, wie noch ausgeführt werden wird.

An der von der Hilfsstütze 10 abgewandten Seite der Pendelstütze 2 ist der Tragarm 6 in der Waagrechten in der Art eines Auslegers verlängert. An seinem in dieser Richtung vorderen Ende ragt nach unten ein Teleskophubwerk in Form eines teleskopartig ausschiebbaren Arms 18 ab. Dies wird anhand der

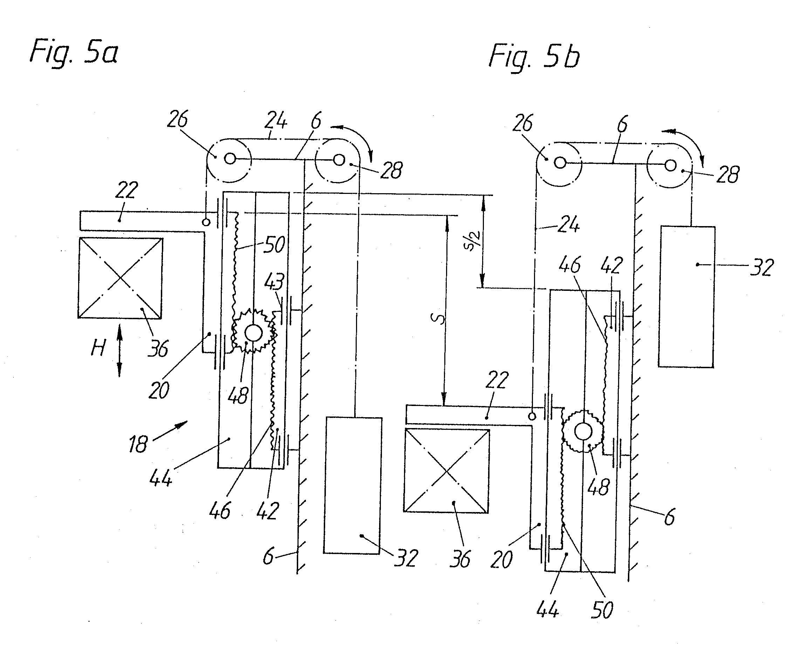

Fig. 5 noch näher erläutert. An dessen (18) in ausgeschobenem
Zustand untersten Teil 20 ragt in Richtung des Tragarms 6, also
waagrecht, ein weiterer Arm 22 starr ab.

Am Teil 20 ist eine Kette 24 befestigt, die in der Schwenkebene
senkrecht nach oben und dann um ein freies Kettenrad 26 um 90$^\circ$
umgelenkt entlang des Tragarms über ein zweites Kettenrad 28
läuft, das von einem zweiten Motor 30, der vorzugsweise ein
Scheibenläufermotor ist, angetrieben wird. Das andere Ende der
Kette ist an einem Ausgleichsgewicht 32 befestigt. Das
Gegengewicht 32 läuft in der hohl ausgebildeten Stütze 2.

Am im obigen Sinne vorderen Ende des weiteren Arms 22 sind die
eigentlichen Trageinrichtungen für das umzusetzende Gut, im
vorliegenden Falle ein Satz 34 pneumatischer Überdruckgreifer
für die Umsetzung von Flaschen, an einem Greiferträger 36
angebracht. Diese Anbringung ist herkömmlich (gefedert
pendelnd) und wird daher hier nicht näher erläutert.
Die Auslenkung der Stütze 2 durch den Exzenterantrieb 12, 14,
16, und/oder der Anbringungsort der Stütze 10 und/oder die
Länge der Schubstange 12 ist so bemessen, daß in der in der
Fig. 1 linken, ausgezogen dargestellten Stellung sich der
Greiferträger 36 senkrecht über einer ersten Förderbahn 38, in
diesem Falle der Gebindeablaufbahn, befindet und in der in Fig.
1 rechten, gestrichelt dargestellten Stellung sich der Greiferträger 36 senkrecht über einer zweiten Förderbahn 40, in diesem
Falle der Flaschenzuführbahn, befindet.

Die Steuerung der Maschine ist in einem Schalt-und Regelschrank
42 untergebracht.

Durch den Antrieb 14, der bevorzugt ein polumschaltbarer Drehstrommotor ist, wird also im wesentlichen die horizontale
Stellung (Stellung in x-Richtung, vgl. Koordinatenkreuz in den
Fig.) des Greiferträgers 36 und der an ihm befindlichen Greifer bestimmt. Durch die Schwenkbewegung der Stützenanordnung ergibt sich allerdings auch ein gewisser Vertikalhub, der bei der Steuerung zu berücksichtigen ist. Durch den Antrieb 30, der bevorzugt ein Gleichstrom-Antrieb mit 4-Q-Regelung ist, wird (bis auf den oben erwähnten Beitrag durch die Schwenkbewegung) die vertikale Stellung (Stellung in y-Richtung) der Greifer bestimmt. Es ergibt sich die sehr günstige Möglichkeit, die Beladekurve beim Einpacken oder Auspacken der Kleinpackungen, hier Flaschen, aus dem Transportgebinde frei zu wählen, also z.B. unterschiedlich von der Leerfahrt beim Einpacken oder Auspacken. Unbeladen kann die knappere Kurve B gewählt werden, die also flacher über den Förderbahnen verlaufen kann, da wegen des fehlenden Ladegutes der Abstand Greiferträger/Bahn geringer sein kann. Ferner können Richtungswechsel abrupter sein, weil ohne Last geringere Fliehkräfte auftreten und außerdem kann die Bahn entsprechend schneller durchfahren werden, so daß sich insgesamt ein schnellerer und sparsamerer Betriebsablauf ergibt. Beladen wird die längere Kurve A gewählt.

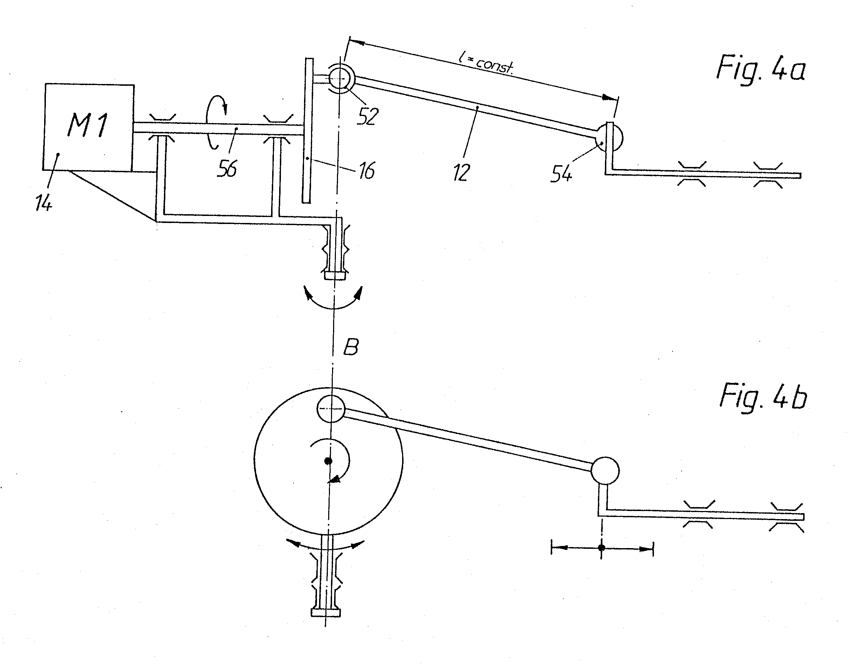

Anhand der Fig. 4a und Fig. 4b wird eine bevorzugt vorgesehene Möglichkeit zum stufenlosen Verstellen des Horizontalhubs an einer schematischen Darstellung erläutert. Die Schubstange 12 ist mittels Kugelgelenken 52 und 54 an der Exzenterscheibe oder -Kurbel einerseits bzw. der nicht im einzelnen dargestellten Schwinge andererseits angebracht. Dadurch kann sie aus der Schwingebene herausgeschwenkt werden. Die Anordnung aus Motor 14 (M1), Abtriebswelle 56 und Exzenterscheibe 16 ist um eine zur Exzenterscheibe parallele, durch den Gelenkpunkt gehende, Achse B verschwenkbar. Dies geschieht bspw. durch einen Servomotor (nicht gezeigt), der vorzugsweise mit einem Rotations- Impulsgeber versehen ist und der von der zentralen Steuerung mit gesteuert wird. In der Stellung der Fig. 4a, in der die Exzenterebene zur Hubrichtung senkrecht ist, findet also gar kein Hub statt, während in der Fig. 4b, wo die Exzenterebene zur Hubrichtung parallel ist, der maximale Hub erreicht wird.

Es sind auch andere Arten denkbar, durch Verstellung der
Scheibenlage den Hub zu verändern, doch werden diese nicht die
Symmetrie und Übersichtlichkeit der Verschwenkung um die
angegebene Achse haben.

Nachfolgend wird anhand der Fig. 5a und 5b der erfindungsgemäße
Hubmechanismus, der von eigenständiger Bedeutung ist, näher
erläutert. Ein erstes, inneres Element 42 ist starr an einem
Gestell, hier dem Ausleger 6 der Maschine, angebracht. Es weist
eine Gleitführung, bspw. durch Gleitrollen, 43 auf, in der ein
zweites, mittleres Element 44, im vorliegenden Beispiel in
vertikaler Richtung (Hubrichtung des Teleskops), geführt ist.
Das innere Element 42 trägt über seine wirksame Länge eine
Zahnstange 46, die sich in der Gleitrichtung erstreckt und mit
einem auf dem mittleren Element frei drehbar befestigten Ritzel
48 kämmt. (Die Drehachse des Ritzels ist also senkrecht zur
Hub- oder Gleitrichtung.) Das Ritzel ist so auf dem mittleren
Element angeordnet, daß es in der einen Gleit-Endstellung des
mittleren Teils relativ zum inneren Teil (noch) mit dem einen
Ende und in der anderen Gleit-Endstellung (noch) mit dem
anderen Ende von dessen Zahnstange 43 in Eingriff steht.

Mittels einer Gleitführung ist ein drittes, äußeres Element 20
am mittleren Element 44 ebenfalls in der Hubrichtung geführt.
Das, zweckmäßig spiegelsymmetrisch zum ersten, inneren Element
ausgeführte, dritte, äußere Element weist ebenfalls eine sich
in Hubrichtung erstreckende Zahnstange 50 auf, die ebenfalls
mit dem Ritzel 48 kämmt. Dabei ist das dritte Element relativ
zum zweiten, mittleren Element so angeordnet, daß das Ritzel 48
in der einen Gleit-Endstellung des mittleren Teils relativ zum
äußeren Teil (noch) mit dem einen Ende und in der anderen
Gleit-Endstellung (noch) mit dem anderen Ende von dessen
Zahnstange 50 in Eingriff steht. Ferner liegen die nicht mit
dem Ritzel in Eingriff stehenden Enden der Zahnstangen in den
Gleit-Endstellungen des mittleren Teils in entgegengesetzten
Richtungen.

0124854

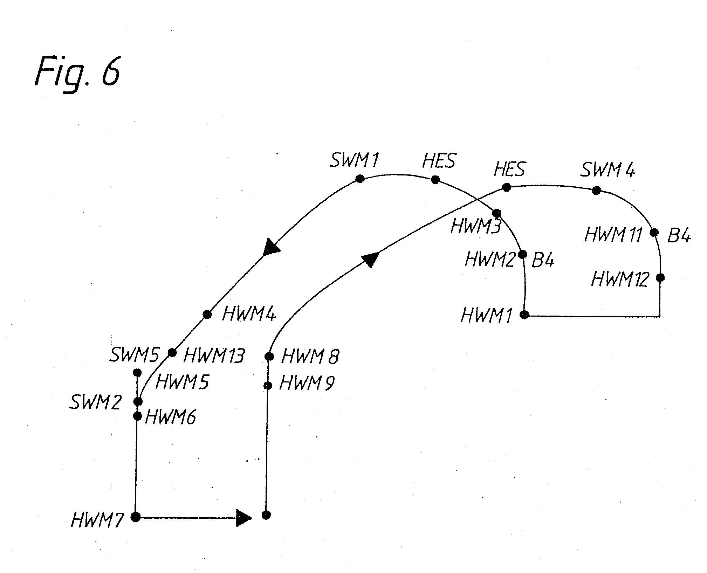

Nachfolgend wird vorwiegend anhand der Fig. 6 der Bewegungsablauf, der durch die oben geschilderte Mechanik mit Hilfe der
erfindungsgemäßen Steuerung erreicht wird, näher erläutert, und
zwar am Beispiel eines Auspackvorgangs aus einem Gebinde.

In einem Anfangszustand nach dem Einschalten befindet sich die
Maschine mechanisch in einem (prinzipiell frei wählbaren)
Anfangszustand, z.B. ist die Schwinge 2 in ihrer rechten Endstellung und das Hubwerk auf die Höhe der Flaschenbahn 40
abgesenkt.Die mechanische Endstellung wird schon beim
Abschalten der Maschine eingenommen. Beim Einschalten wird
überprüft, ob alle notwendigen Bedingungen (z.B. Vorhandensein
von Strom für die Motoren, ev. Druckluft, das Vorhandensein von
Gebinden und/ oder Kleinpackungen, die Abwesenheit eines Staus)
erfüllt sind. Diese Bedingungen bzw. ihre Erfüllung werden an
die zentrale Steuer- und Regelungseinheit gegeben. Diese gibt
einen "Start-Vorbereitungs"-Befehl, der sicherstellt, daß sich
die Kurbel 16 des Motors 1 im rechten Totpunkt befindet, daß
die beiden Motoren 14 und 30 auf "aus" gestellt sind, wodurch
die an den Motoren angebrachten Rotations-Impulsgeber ruhen,
daß die Bremsen Br1 und Br2 am Motor 14 bzw. 30 angezogen sind
usw. Die Bahnkurve muß nicht notwendig bis zu den Totpunkten
verlaufen, es können auch anderer Umkehrpunkte vorgewählt
werden. Ein optimales Einstellen der Kurvengeometrie wird in
der Regel allerdings durch Verstellung (auch) der Mechanik
erreicht.

Wird dann durch die Bedienungsperson die Automatik
eingeschaltet, so gibt die Steuereinheit beim Vorliegen von
positiven Meldungen eines Signalgebers HWM1, der feststellt und
angibt, ob sich das Hubwerk in seiner für die Flaschenbahn
vorgesehenen Endstellung befindet und eines Signalgebers B4
(Schwingenendschalter), der feststellt und angibt, ob sich die
Schwinge im rechten Totpunkt befindet, den Befehl, den
Greiferkopf in die positive y-Richtung zu heben. Es wird also der Motor M2 (14) auf "ein" geschaltet und die Bremse Br2
gelöst. Daraufhin werden durch den Rotations-Impulsschalter B2-
R Impulse abgegeben, die auf ein Zählwerk in der Steuereinheit
einwirken, wodurch die momentane vertikale Stellung des
Greiferkopfes in der Steuereinheit verfügbar ist. In dieser
Phase kommt die Drehzahl $n_2$ des Motors M2 auf ihren Sollwert.
Dieser Sollwert ist in einem Sollwertgeber in der Steuereinheit
vorgegeben und insbesondere zeitlich veränderlich.

Beim Erreichen eines Zählwertes, HWM2, des Zählers für die
Bewegung durch den Hubmotor 30, und dem (weiteren) Vorliegen
des Signals vom Schwingenendschalter B4 gibt die Steuereinheit
den Befehl zum Verfahren des Greiferkopfes 36 in die negative
X-Richtung. Dabei kann es so sein, daß der Impuls durch das
Hubzählwerk in der Steuereinheit beim Erreichen eines
voreinstellbaren Wertes des Zählwerks abgegeben wird, oder daß
eine körperliche Einrichtung, z.B. eine Lichtschranke, vorhanden ist, die dann ebenfalls verstellbar ist. Durch diesen
Befehl der Steuereinheit wird der Motor M1 auf "ein" geschaltet
und dreht (in Fig. 1 im Uhrzeigersinn). Über den Kurbeltrieb
wird der Stütze dann eine sinoide Beschleunigung erteilt. Der
Motor kommt von einer Drehzahl $n_1$ = 0 auf seine Solldrehzahl.
Im vorliegenden Ausführungsbeispiel ist diese Solldrehzahl
nicht zeitabhängig. Die Motorstellung und damit die Stellung
der Schwinge wird über einen Rotations-Impulsgeber B1-R erfaßt
und an einen weiteren Zähler in der zentralen Steuereinheit abgegeben. Dort erfolgt ein fortwährender Istwert-Sollwert-
Vergleich an beiden Zählern sowie ein Vergleich der Istwerte
beider Zähler. Entsprechend dem jeweiligen Vergleich und der
Übereinstimmung mit bzw. Abweichung von einer voreinstellbaren
Bahnkurve werden die Drehzahlwerte der Motoren eingestellt,
wobei im Ausführungsbeispiel eine Kontrolle über einen Tachogenerator T am Motor M2 und damit eine Regelung erreicht wird.

Beim Erreichen eines vorgegebenen Wertes bei der Hubzählung oder dem Erreichen eines Impulsgebers, Signal HWM3, wird das Hubwerk in Vorbereitung der Bewegungsumkehr auf langsam geschaltet und nähert sich einem oberen Stop (HES). Dieser ist im vorliegenden Ausführungsbeispiel für die Leerfahrt (es wird der Fall Entladen betrachtet) nicht am obersten für das Hubwerk möglichen Punkt. Dort ist allerdings ein zusätzlicher Notbregrenzungsschalter B6 vorgesehen. Dieser kann im übrigen bei einer Unterbrechung des automatischen Vorgangs auch als ein weiterer Anfangspunkt dienen, um die Steuerung einzustellen, damit die Anlage nicht ganz in die Ausgangsstellung übergeführt zu werden braucht.

Beim Erreichen des Punktes HES wird das Hubwerk abgestoppt, d.h. $n_2$ wird 0. Je nach der voreingestellten Soll-Bahnkurve folgt eine Phase ausschließlicher (vom verhältnismäßig geringen y-Beitrag durch die Schwenkbewegung einmal abgesehen) x-Bewegung, wie gezeigt, oder die Abwärts-Hubbewegung wird sogleich eingeleitet. Die Einleitung der Abwärts-Hubbewegung geschieht jedenfalls durch Erreichen eines Schalters oder das Vorliegen eines Signals, SWM1. Der Motor M2 ändert seine Drehrichtung, wobei durch den Rotations-Impulsgeber entweder ein weiterer Zähler für die Abwärtsbewegung beaufschlagt wird, oder der vorerwähnte Zähler für die Hubbewegung jetzt abwärts zählt. Das Hubwerk beschleunigt in der negativen y-Richtung auf den vorgegebenen, ggfs. wieder zeitlich veränderlichen Sollwert. Der Motor M1 bewegt die Schwinge weiter in Richtung auf den linken Totpunkt zu.

In die Steuereinheit wird auch über geeignete Erfassungseinrichtungen eingegeben, ob z.B. überhaupt zu be- oder hier: entladende Gebinde auf der Gebindezuführbahn vorhanden sind. In einem solchen Fall wird durch ein Signal HWM4 das Hubwerk verlangsamt in eine Wartestellung verbracht.

Ferner sind besondere Kontrollen vorgesehen, die das Verhältnis von Hubhöhe zu Schwingenstellung überwachen. Diese können in körperlichen Fühlern bestehen oder durch einen Sondervergleich der Zählwerke vorgenommen werden (Signale SWM5, HWM5).

Bei einer vorgegebenen Schwingenstellung wird die Bremsphase in negativer x-Richtung eingeleitet. Die Kurbel des Motors 14 erreicht dabei eine ungefähre 10h-Stellung, die Drehzahl $n_1$ geht gegen 0.

Beim Erreichen eines Impulsgebers (B4), der den linken Totpunkt der Kurbel 16 anzeigt, oder eines entsprechenden Zählerstandes für die Position der Schwinge wird durch das Signal SWM2 die Schwinge über der Gebindebahnseite angehalten. Die Länge der Schubstange 12 und/oder die Drehstellung des Motors 14 um seine vertikale Achse ist gerade so bemessen, daß sich der Greiferkopf in Sollstellung senkrecht über der Gebindebahn befindet, wenn der linke Totpunkt erreicht ist.

Durch das Signal HWM6 wird die Abwärtsbewegung des Hubwerk verlangsamt. Der Motor M1 wird also auf "aus" gestellt und die Bremse Br1 auf "ein", die Stütze hält im linken Endpunkt an. Der Motor M2 reduziert seine Drehzahl $n_2$ und der Greiferkopf vollführt eine reine vertikale Bewegung und taucht in das Gebinde ein. Dieses wurde von der entsprechend gesteuerten Bewegung der Gebindebahn geliefert. Beim Erreichen eines Schalters HWM7 ist der untere Totpunkt der Hubbewegung erreicht, und die Steuereinheit schaltet nun auch den Motor M2 (30) "aus" und die Bremse Br2 "ein". Der Greiferkopf nimmt nun die Kleinpackungen aus dem Gebinde auf.

Nach Abschluß der Aufnahme läßt die Steuereinheit den Motor M2 anlaufen und öffnet die Bremse Br2. Der Greiferkopf fährt dann in die +y-Richtung. Der Weg zurück zur Packungsabführbahn wird grundsätzlich entsprechend dem Weg zur Gebindezuführbahn geregelt. Es ist jedoch durch eine geeignete Sollwerteinstellung für die Zähler und/oder durch eine geeignete
Anbringung von Impulsgebern möglich, den Weg und/oder die
Geschwindigkeit, mit der der Weg durchfahren wird, anders zu
gestalten, um der Tatsache, daß die Greiferköpfe jetzt beladen
sind und daher nicht so hohen Fliehkräften ausgesetzt werden
dürfen, Rechnung zu tragen. Ferner muß der beladene Greiferkopf
36 höher über das Gebinde angehoben werden, bevor die
Rückverschwenkung der Schwinge einsetzen darf. Dies ist in Fig.
1 durch die Leerkurve B und die Lastkurve A angedeutet.

Schließlich wird dann durch Ausschalten des Motors M1 in der
rechten Totpunktstellung und nachfolgendes Ausschalten des
Motors M2 der vom Greiferkopf aufgenommene Gebindeinhalt auf
der Bahn 40 abgesetzt und losgelassen.

Es ist also ersichtlich, daß durch das Vorwählen einer
geeigneten Bahnkurve, der auch unterschiedliche Geschwindigkeiten und Beschleunigungen zugeordnet werden können, durch
Eingabe dieser Werte in einen Speicher, der dann seine Werte
auf einen Vergleicher gibt, der sie wiederum mit den Momentanwerten aus Zählern, die bspw. wie hier durch die Umdrehung der
Antriebsmotoren fortgeschaltet werden, und Tachogeneratoren und
ggfs. körperlichen End- oder Bahnschaltern, vergleicht, die
günstigen mechanischen Eigenschaften der Maschine optimal ausgenutzt werden können. Dabei braucht die Bahnkurve die
mechanischen Grenzen der Maschine nicht auszufüllen, insbesondere nicht beim Hub- und Absenkvorgang. Auch das Pendel
braucht nicht bis in die Totpunkte geführt zu werden, sondern
kann, wenn es durch einen umkehrbaren Motor angetrieben wird,
auch ohne Durchlaufen der Endpunkte zurückgeführt werden.
Alternativ braucht bei einem nicht umkehrbaren Motor die
maximale Hubabsenkung nicht in den Endpunkten stattzufinden, so
daß sich dann der Greiferkopf noch über die Zu-und/ oder
Abführbahn hinausbewegt. Durch die freie Gestaltung der Bahnkurve können auch Zu- und Abführbahn problemlos in ihren Rollen vertauscht werden und es können mehrere Lagen in Gebinde eingefüllt werden, ohne daß eine Höhenverstellung der Gebinde vorgenommen werden muß. Wie oben geschildert, ist allerdings auch die Mechanik, insbesondere hinsichtlich der Anfangs- und Endpunkte sowie der Weite des Pendelausschlags, sehr flexibel gehalten. Die Eingabe einer Bahnkurve erfolgt bevorzugt durch Abfahren einer optimalen Bahnkurve "von Hand" und kontinuierliche oder punktweise Speicherung ihrer Werte.

Patentansprüche

Maschine zum Ein- und Auspacken von Kleinpackungen in oder aus
oben offenen Transportgebinden,

mit einem horizontalen Grundrahmen (1),

einer sich in einer im wesentlichen senkrechten Ebene nach oben
erstreckenden Stütze (2)

und einem an deren oberen Ende angebrachten, davon im
wesentlichen horizontal abragenden Ausleger (6, 22),

an dem ein Greiferträger (36) angebracht ist, der horizontal
(x) in Richtung des Auslegers beweglich ist und relativ zum
Ausleger vertikal (y) parallel geführt beweglich ist, und mit einem ersten, zumindest die Horizontalbewegung
bewirkenden, Antrieb (14, 16, 12) und mit einem zweiten Antrieb
(30) für die Hubbewegung,

d a d u r c h   g e k e n n z e i c h n e t, daß

die Stütze (2) am Grundrahmen um eine horizontale, zur Richtung
des Auslegers (6) senkrechte, Achse (4) schwenkbar angebracht
ist und für den Ausleger eine Parallelführung (4, 8, 10)
vorgesehen ist.

2. Maschine nach Anspruch 1, gekennzeichnet durch einen Exzenterantrieb (12, 14, 16) zum Verschwenken der (Pendel-)Stütze (2).

3. Maschine nach einem der Ansprüche 1 oder 2, dadurch gekennzeichnet, daß die Schubstange (12) des Exzenterantriebs in der Länge verstellbar ausgebildet ist.

4. Maschine nach einem der Ansprüche 2 oder 3, dadurch gekennzeichnet, daß die Schubstange (12) des Exzenters durch zwei Kugelgelenke (52, 54) einerseits mit dem Exzenter (16) und anderseits mit der Stütze (2) verbunden ist und die Exzenterscheibe um eine zur Exzenterscheibe parallele, durch den Anlenkpunkt des Kugelgelenks (52) an der Exzenterscheibe gehende Achse (B) schwenkbar ist.

5. Maschine nach Anspruch 4, dadurch gekennzeichnet, daß die Anordnung aus Motor (14), Abtriebswelle und Exzenterscheibe (16), vorzugsweise durch einen Servomotor, verschwenkbar ist.

6. Maschine nach einem der vorhergehenden Ansprüche, dadurch gekennzeichnet, daß die Parallelführung des Auslegers (6) durch ein Gelenkparallelogramm aus Grundrahmen (1), Stütze (2), Ausleger (6) und einer Hilfsstütze (10) zwischen Ausleger und Grundrahmen erreicht wird.

7. Maschine nach Anspruch 7, dadurch gekennzeichnet, daß die Hilfstütze (10) an der vom Anbringungsende des Greiferträgers (3) abgelegenen Seite jenseits der Pendelstütze (2) angebracht ist.

8. Maschine nach einem der vorhergehenden Ansprüche, dadurch gekennzeichnet, daß bei Parallelführung des Auslegers der Greiferträger (36) am Ausleger (6) geradlinig geführt wird.

9. Maschine nach Anspruch 8, dadurch gekennzeichnet, daß die geradlinige Führung ein Teleskophubwerk (18, 20; 42 - 50) aufweist.

10. Maschine nach Anspruch 9, dadurch gekennzeichnet, daß das Teleskophubwerk ein erstes (42), ein zweites (43) und ein drittes (20) Verschiebeelement aufweist, wobei das erste (42) und das dritte (20) Element jeweils am zweiten Element (44) in Hubrichtung (H) verschieblich angebracht sind und, sich in Hubrichtung zumindest über die Länge ihrer Verschiebestrecke (s/2) erstreckende, Zahnführungen (46, 50) aufweisen, die einander zugewandt sind und mit gegenüberliegenden Seiten eines am zweiten Element (44) frei drehbar angebrachten Ritzels kämmen, wobei die Verschiebewege so angeordnet sind, daß sich in den beiden Endstellungen die in Hubrichtung voneinander abgewandten Enden der Zahnstangen gegenüberliegen.

11. Maschine nach Anspruch 10, dadurch gekennzeichnet, daß das erste Element (42) am Ausleger (6) und das dritte Element (20) am Greiferträger (36) starr befestigt ist.

12. Maschine nach einem der vorhergehenden Ansprüche, dadurch gekennzeichnet, daß der zweite Antrieb (30) auf der Gelenkachse (8) Stütze/Ausleger angeordnet ist, wobei sich sein Drehmoment vorzugsweise auf dem Ausleger abstützt.

13. Maschine nach einem der vorhergehenden Ansprüche, dadurch gekennzeichnet, daß der Greiferträger an einer Kette (24) aufgehängt ist, die um ein erstes, am Ausleger (6) angebrachtes, freies Umlenk-Kettenrad (26), und um ein zweites, am Ausleger angebrachtes, vom zweiten Antrieb (30) angetriebenes Kettenrad (28) läuft.

14. Maschine nach Anspruch 12 oder 13, dadurch gekennzeichnet, daß eine Einrichtung (32) zum Masseausgleich am dem Greiferträger (36) entgegengesetzten Ende der Kette (24) angebracht ist.

15. Maschine nach Anspruch 14, dadurch gekennzeichnet, daß ein Gegengewicht (32) als Massenausgleich vorgesehen ist.

16. Maschine nach Anspruch 15, dadurch gekennzeichnet, daß das Gegengewicht (32) in der hohl ausgebildeten Stütze (2) läuft.

17. Maschine nach Anspruch 14, dadurch gekennzeichnet, daß als Massenausgleich eine mechanische, hydraulische oder pneumatische Feder vorgesehen ist.

18. Maschine nach einem der vorhergehenden Ansprüche, gekennzeichnet durch eine Steuerung, die eine Einrichtung (B1-R) zur Erfassung des von der Stütze durchfahrenen Winkels mit einem zugehörigen Zähler, eine Einrichtung (B2-R) zur Erfassung des vom Greiferträger (36) zurückgelegten Weges mit einem zugehörigen Zähler, und einen Vergleicher aufweist, wobei der Vergleicher die Momentanwerte der Zähler mit Momentan-Sollwerten einer vorgegebenen Bahnkurve vergleicht und die Geschwindigkeit der Antriebe (14, 30) entsprechend steuert.

19. Maschine nach Anspruch 18, gekennzeichnet durch eine Einrichtung (T) zur Erfassung momentaner Geschwindigkeitswerte der Antriebe.

20. Maschine nach einem der Ansprüche 18 oder 19, gekennzeichnet durch eine Einrichtung zur Speicherung einer Folge von Momentanwerten zumindest während des nichtautomatischen Durchfahrens einer Bahnkurve durch den Greiferträger (36).

Fig.1

Fig. 2

# Fig. 3

Fig. 4a

*l = const.*

M1

52

56

16

12

54

14

B

Fig. 4b

0124854

Fig. 5a

Fig. 5b

# Fig. 6